# EUROPEAN PATENT SPECIFICATION

(11) **EP 2 797 845 B1**
(45) Date of publication and mention of the grant of the patent: **30.05.2018**
(21) Application number: 12815726.0
(22) Date of filing: 19.12.2012
(51) Int. Cl.: C02F 1/50, C02F 103/02, C02F 103/08, C02F 103/10, C02F 103/16, C02F 103/30, C02F 103/32, B01D 39/18, B01D 39/20, B01D 29/00, B01D 27/04

(54) **IMPROVING THE EFFICIENCY OF PERACIDS**
VERBESSERUNG DER EFFIZIENZ VON PERSÄUREN
AMÉLIORATION DE L'EFFICACITÉ DE PERACIDES

(30) Priority: 30.12.2011 FI 20116335
(43) Date of publication of application: 05.11.2014
(73) Proprietor: Kemira OYJ, 00180 Helsinki (FI)
(72) Inventor: EKMAN, Jaakko, FI-01630 Vantaa (FI); HESAMPOUR, Mehrdad, FI-02660 Espoo (FI); KOLARI, Marko, FI-01260 Vantaa (FI)
(74) Representative: Berggren Oy, Helsinki & Oulu
(86) International application number: PCT/FI2012/051277
(87) International publication number: WO 2013/098478

(56) References cited:
- EP-A1- 2 390 408
- WO-A1-2006/064084
- WO-A2-03/062149
- WO-A2-2006/035320
- WO-A2-2008/056025
- CN-A- 1 669 944
- CN-A- 101 555 061
- US-A- 5 980 758

## Description

The invention relates to a method for preventing microbial growth in process waters. The invention is particularly suitable for the treatment of industrial process waters, such as process water of pulp and paper industry, metal industry, textile industry or food industry. The treatment is applicable also to waters of desalination processes.

Peracetic acid has been widely used as biocide. Compared to other biocides, peracetic acid is inexpensive. If, however, peracetic acid is the only biocide used, the efficiency thereof is reduced in the long run due to selection of microbes on the paper machine producing higher amounts of extracellular material preventing the penetration of peracetic acid, thus lowering the killing activity thereof. It is thus known that peracetic acid does not alone provide a long-lasting biocidal activity, and needs another biocide as a booster. Peracetic acid has been used together with a non-oxidizing biocide, such as benzisothiazoline (US 5 980 758) or with triamine compounds (WO 03/062149). Performic acid (PFA) has also been used for controlling the growth of microorganisms and biofilm formation in different applications, for example in processes of pulp and paper industries. Depending on the bacterial population and biofilm, different concentration of performic acid is needed. In some cases microbes can be killed only with high doses of PFA, which has the disadvantage that it lowers the pH.

The document WO08056025 A2 describes a method and a compound for the prevention of microbial growth in process waters, wherein first a peracid compound, and thereafter a halogenated dialkyl hydantoin are added to the process water. The weight ratio of the peracid compound to the halogenated dialkyl hydantoin should be at least 2:1. The amount of the peracid compound was calculated as active agent, while the amount of halogenated dialkyl hydantoin was calculated as active chlorine.

Although peracids have been used for preventing microbes in process waters there is still a need for an improved method for the prevention of microbes that is acceptable for the environment, lacks corrosive effect of the equipment and is cost-effective.

### Summary

One object of the present invention is to provide an improved method for the prevention of microbial growth in process waters.

In the present invention it has been surprisingly found that the efficiency of peracids and in particular performic acid can be improved by adding aluminium ions.

Thus, according to the invention, a method for the prevention of microbial growth in process waters is provided, wherein aluminium ions are added into process water prior to or with the addition of a peracid or a mixture of peracids to reach or to maintain the concentration of aluminium ions in the process water on the level of at least 0.05 ppm. The biocidal performance of said peracid or a mixture of peracids in the process water is thereby improved.

The advantage of the invention is that less peracids are needed to get the same performance as with peracids alone. For example, it was shown that less than half the amount of performic acid was needed with aluminium ions to obtain the same result as with performic acid alone. Hence, the cost efficiency of the method of killing microbes is improved, since less peracids are needed when inexpensive aluminium salts are used in combination with peracids.

Another advantage of the invention is that aluminium ions improve the killing effect of peracids in particular against freely swimming microbes.

### Detailed description of the invention

It has now been found that an excellent effect is achieved by adding performic acid, peracetic acid or another peracid to process waters in the presence of aluminium ions for killing the microbes present by an agent that is environmentally acceptable and non-corrosive. The efficacy of peracids can be significantly increased by adding to process water aluminium ions or if there are aluminium ions already present in said process water, maintaining the level of residual aluminium ions in said process water on the level of at least 0.05 ppm.

Thus, according to the invention, a method for the prevention of microbial growth in process waters is provided, wherein a peracid and aluminium ions are added into said process water.

It is known that aluminium ions have been used as flocculant or coagulant in some water treatment processes. However, in flocculant or coagulant applications aluminium ions are removed from the processed water together with the flocculated or coagulated material, whereas in the present invention aluminium ions are maintained on a specific level in the process water to enhance the efficacy of peracids.

The advantage of peracids and in particular performic acid is based on the capability of performic acid to reach the membrane surface of microbes. However, in some applications, such as in desalination, maximum concentration of performic acid is limited, since high concentration of performic acid lowers the pH in the treated process water. By improving the efficacy of performic acid by aluminium ions, allows the use of performic acid to areas of application, where earlier was used other chemicals.

One advantage of the invention is in particular based on the capability of peracids, in particular performic acid together with free aluminium ions to kill efficiently and quickly freely swimming microbes in process water, whereas for example the use of hydantoin to improve the effect of peracids is based mainly on the capability of hydantoin to penetrate into microbial cells.

If process waters comprise aluminium ions as residual aluminium, according to the present disclosure, the amount of aluminium ions may be determined and adjusted to a level of at least 0.05 ppm and maintained on that or higher level. The expression "aluminium ions are added to or maintained on the level" means that the level of aluminium ions is adjusted in process water onto a specific level. If the level of residual aluminium ions is under 0.05 ppm, aluminium ions are added so that the desired level is reached or if the level of aluminium ions is at least 0.05 ppm, the level is maintained by adjusting the concentration of aluminium ions to the desired level.

By "adjusting" is meant that aluminium ions are added a sufficient amount to reach the desired level, at least 0.05 ppm, and/or added a sufficient amount to maintain the desired level, at least 0.05 ppm in the process water.

Said peracid may be an organic peracid or percarbonate.

Said organic peracid is peracetic acid or performic acid, or a mixture thereof. According to one embodiment of the invention the mixture comprises performic acid to peracetic acid in the ratio 1/10 to 10 /1. According to another embodiment of the invention the ratio of performic acid to peracetic acid is 1/5 to 5/1. In a preferred embodiment the ratio is 2/1.

Peracetic acid may be an equilibrium solution thereof, or distilled peracetic acid.

According to one particularly preferred embodiment of the invention the peracid is performic acid. Performic acid may preferably be an equilibrium solution thereof. The equilibrium solution is typically made by mixing formic acid solution with hydrogen peroxide solution and using sulphuric acid as a catalyst.

The aluminium ions are preferably from aluminium salts, such as aluminium chloride, polyaluminium chloride, aluminium sulphate, aluminium hydroxide or aluminium chlorohydrate. A suitable source for aluminium ions is in particular aluminium chloride, aluminium sulphate or polyaluminium chloride.

The peracid is added into the process water. The amount of the peracid is expressed as active substance. According to the invention the amount of added peracid in the process water is 0.2 - 50 ppm, in another embodiment 0.5 - 20 ppm, in a further embodiment 0.7 - 7 ppm. Usually it is of advantage, if low amount of peracid is used in various applications. The added amount of peracid in the process water may be at least 0.2 ppm, at least 0.4 ppm, at least 0.5 ppm, at least 0.7 ppm or at least 1 ppm. The added peracid may be in the process water in an amount of 50 ppm or less, preferably 30 ppm or less, more preferably 20 ppm or less, most preferably 10 ppm or less or even 5 ppm or less. The ppm values mean the concentration of the peracid in the process waters and equal to mg/l. High amounts of peracid prevent the microbial growth effectively. However, when used together with aluminium, lower amounts of peracid can be used. This is of benefit, since there is less need for example to adjust the pH of the treated process water.

The amount of aluminium ions is adjusted in the process water before the addition of the peracid or at the same time as adding of the peracid. In one embodiment the amount of aluminium ions is adjusted to the level of 0.05 - 100 ppm, in another embodiment 0.5 - 20 ppm, in one further embodiment 0.5 - 5 ppm. Aluminium salts are inexpensive, but it is still of advantage, if low amount of aluminium salts are added in various applications. Aluminium ions may be added 100 ppm or less, preferably 50 ppm or less, more preferably 20 ppm or less, most preferably 10 ppm or even 5 ppm or less. In order to achieve the desired effect, the amount of aluminium ions may be adjusted to the level of at least 0.05 ppm, at least 0.1 ppm, at least 0.5 ppm, at least 1 ppm, at least 2 ppm, at least 3 ppm or at least 4 ppm. Preferred components of the inventive combination and preferred amounts are defined above.

According to one embodiment of the invention, the aluminium ions are added first, followed by the treatment of the process water with said peracid, without an extended interval between the treatments. In case of flowthrough process waters this is preferably carried out by adding the aluminium ions for instance at suction side of a pump resulting in rapid and efficient mixing, followed by the adding of said peracid in the same pipeline after the pump, or to the next tank. The solution of choice depends among other things on the flow rate, and it is crucial that the treatment is directed to the substantially same water fraction.

If the process water is circulated, such as when the process water is for example cooling water in a closed system, when once added, the aluminium ion concentration may maintain about the same in the process water to be treated and the aluminium ion addition can be carried out only if the concentration of it falls below the desired level.

If the process water is flowing through the system and the level of aluminium ions is not maintained, the interval between the dosages of the aluminium ions and peracid may be from about 0.5 seconds to about 24 hours, in some applications from 10 seconds to 60 minutes, in some other applications from 1 hour to 20 hour.

According to another embodiment of the invention, the aluminium ions are added at the same time with said peracid, without an interval between the treatments.

According to this disclosure, it is also possible to add said aluminium ions and peracid at the same point, such as tank, said aluminium ions being added first, followed by said peracid after the interval as defined above. Alternatively, aluminium ions and said peracid are added at the same time.

The addition of said aluminium ions may be continuous or intermittent. The addition of said peracid may be continuous or intermittent. In case of intermittent dosage, it is substantial for the desired effect according to the invention that said peracid is added to the same water fraction as said aluminium ions added first.

The invention is directed to the prevention of microbial growth, all microorganisms present in process waters generally being targeted, such as aerobic bacteria, facultatively anaerobic bacteria, sulfate reducing bacteria, bacteria forming biofilms, yeasts, moulds, and protozoa.

The invention is particularly suitable for the treatment of process waters including raw waters and water in cooling systems. Particularly suitable applications include circulated waters in the production of paper and board, chemical or reclaimed paper pulps, circulated cooling waters, and waters in cooling towers. Other applications include cooling and circulating waters in food industry, textile industry and metal industry, effluents of industrial processes and further waters in cooling systems of hospitals (prevention of the bacterium *Legionella*)*.* The invention is also useful for the treatment of ballast waters of ships. Yet another application comprises waters in oil fields. Particularly suitable applications are waters of desalination processes, in particular of reverse osmosis desalination.

In some of the tests described in the Examples and Tables, the combination of aluminium ions and peracids provides evident effect in biocidal activity, that is, the result is better than when peracids are used alone. It is remarkable that the efficacy of peracid, in particular performic acid, can be improved by the addition of aluminium ions so that less than half the amount of peracids is needed compared to the use of peracids alone.

The results of the tests showed clearly that the amount of peracids can be significantly reduced. As a consequence the costs of preventing microbial growth can be reduced of several tens of percents.

The invention will now be described in more detail by means of the following non-limiting examples.

### Example 1

As test microorganism in the experiments was used bacterium *Pseudomonas aeruginosa* strain VTTE-96726 (the strain is available also as DSM 939 and ATCC 15442). It was cultivated overnight in nutrient broth (Lab M, Bury, UK) at 37°C with agitation 75 rpm. The culture was harvested by centrifugation (3000 rpm, 10 min), washed with 0.9% NaCl solution and finally suspended into artificial seawater (prepared according to ASTM standard D1141) to final cell concentration of approximately 10⁵ cfu/ml. Performic acid equilibrium solution was made by mixing in 1:1 weight proportion of a solution that contained 50% hydrogen peroxide with a solution that contained 75 weight-% formic acid, 12 weight-% sulfuric acid and 13 weight-% water. The PFA content of the equilibrium solution was about 14 weight-%.

The cells were exposed in one experiment to 0.7 ppm of performic acid as active substance (corresponds to 5 ppm of the equilibrium solution) and in another experiment to 0.7 ppm of performic acid as active substance and 0.5 ppm Al³⁺ ions (from AlCl₃) and in third experiment 0.7 ppm of performic acid as active substance and 2.0 ppm Fe³⁺ ions (from FeCl₃) for 15 minutes at 25°C with agitation 75 rpm. Living cells were enumerated on plate count agar (PCA). The results in Table 1 showed that 0.5 ppm aluminium in 0.7 ppm PFA improved the efficacy of PFA by 2 log units.

**Table 1. Effect of Al³⁺ and Fe³⁺ with PFA to P.aeruginosa.**

| PFA (ppm) | Al³⁺ (ppm) | Fe³⁺ (ppm) | Viable *P.aeruginosa* cells (cfu/ml) |
|---|---|---|---|
| 0 | 0 | 0 | 51091 |
| 0.7 | 0 | 0 | 43636 |
| 0.7 | 0.5 | 0 | 1273 |
| 0.7 | 0 | 2 | 49909 |

### Example 2

*Pseudomonas aeruginosa* VTTE-96726 was cultivated overnight in nutrient broth as described in Example 1 at 37°C with agitation 75 rpm. The culture was harvested by centrifugation, washed with 0.9% NaCl solution and finally suspended into artificial seawater. Performic acid equilibrium solution was made as in the example 1.

The cells were exposed to 0.4 - 1 ppm of performic acid as active substance (corresponds to 2.8 - 7.1 ppm of the equilibrium solution) and to 0 - 4 ppm Al (from AlCl₃) for 15 minutes at 25°C with agitation 75 rpm. Living cells were enumerated on plate count agar (PCA). The results can be seen in Table 2.

**Table 2. The effect of Al³⁺ with PFA to P. aeruginosa**

| PFA (ppm) | Al³⁺ (ppm) | Viable *P.aeruginosa* cells (cfu/ml) |
|---|---|---|
| 0 | 0 | 63 818 |
| 0 | 0.05 | 54 818 |
| 0 | 0.5 | 57 545 |
| 0 | 2 | 56 818 |
| 0 | 4 | 54 273 |
| 0.4 | 0 | 59 636 |
| 0.4 | 0.05 | 62 545 |
| 0.4 | 0.5 | 24 364 |
| 0.4 | 2 | 2 818 |
| 0.4 | 4 | 7 727 |
| 0.7 | 0 | 42 545 |
| 0.7 | 0.05 | 26 727 |
| 0.7 | 0.5 | 182 |
| 0.7 | 2 | <100 |
| 0.7 | 4 | <100 |
| 1 | 0 | 6 636 |
| 1 | 0.05 | 1 182 |
| 1 | 0.5 | <100 |
| 1 | 2 | <100 |
| 1 | 4 | <100 |

The results showed that aluminium ions increased the efficacy of PFA. 0.4 ppm PFA with 2 ppm Al³⁺ killed more than 1 ppm PFA without aluminium. Aluminium ions alone did not have effect to *P. aeruginosa.*

### Example 3

As test microorganism in the experiments was used bacterium *Pseudomonas aeruginosa* strain VTTE-96726 (the strain is available also as DSM 939 and ATCC 15442). It was cultivated overnight in nutrient broth (Lab M, Bury, UK) at 37°C with agitation 75 rpm. The culture was harvested by centrifugation (3000 rpm, 10 min), washed with 0.9% NaCl solution and finally suspended into artificial seawater (prepared according to ASTM standard D1141) to final cell concentration of approximately 10⁶ cfu/ml. Performic acid equilibrium solution was made by mixing in 1:1 weight proportion a solution that contained 50% hydrogen peroxide with a solution that contained 75 weight-% formic acid, 12 weight-% sulfuric acid and 13 weight-% water. The PFA content of the equilibrium solution was about 14 weight-%.

The cells were exposed in one embodiment to 1.0 ppm of performic acid as active substance (corresponds to 7 ppm of the equilibrium solution) and in another embodiment to 1.0 ppm of performic acid as active substance and 2.0 ppm Al³⁺ ions (from Al₂(SO₄)₃) and in third embodiment 1.0 ppm of performic acid as active substance and 2.0 ppm Mn²⁺ ions (from MnSO₄) for 15 minutes at 25°C with agitation 75 rpm. Living cells were enumerated on plate count agar (PCA). The results showed that 2.0 ppm aluminium in 1.0 ppm PFA improved the efficacy of PFA by 2 log units but manganese did not enhance the efficacy of PFA.

**Table 3. Effect of Al³⁺ and Mn²⁺ with PFA to P.aeruginosa.**

| PFA (ppm) | Al 3⁺ (ppm) | Mn²⁺ (ppm) | Viable *P.aeruginosa* cells (cfu/ml) |
|---|---|---|---|
| 0 | 0 | 0 | 900 000 |
| 0 | 0 | 2 | 720 000 |
| 1 | 0 | 0 | 4 234 |
| 1 | 2 | 0 | <100 |
| 1 | 0 | 2 | 5 091 |

## Claims

1. A method for the prevention of microbial growth in process water, which comprises adding aluminium ions into process water prior to or with the addition of a peracid or a mixture of peracids to maintain the concentration of aluminium ions in the process water on the level of at least 0.05 ppm thereby enhancing the biocidal performance of said peracid or a mixture of peracids in the process water,
wherein the peracid is peracetic acid or performic acid, or a mixture thereof and wherein the amount of the added peracid in the process water is 0.2 ppm - 50 ppm.

2. The method according to claim 1, wherein the peracid is performic acid.

3. The method according to claim 1 or 2, wherein the aluminium ions are from aluminium salts, such as aluminium chloride, polyaluminium chloride, aluminium sulphate, aluminium chlorohydrate, aluminium hydroxide.

4. The method according to any one of claims 1 to 3, wherein the amount of the added peracid in the process water is 0.5 - 20 ppm, more preferably 0.7 - 7 ppm.

5. The method according to any one of claims 1 to 4, wherein the aluminium ions are adjusted on the level of 0.05 ppm - 100 ppm, preferably 0.5 - 20 ppm, more preferably 0.5 - 5 ppm in the process water before or with the addition of the peracid.

6. The method according to any one of claims 1 to 5, wherein the process water comprises fresh water, cooling water, recirculation waters and effluents of industrial processes, waters of desalination processes.

7. The method according to any one of claims 1 to 6, wherein the process water comprises industrial process water from pulp and paper industry, metal industry, textile industry or food industry.

8. The method according to any one of claims 1 to 7, wherein the process water comprises water from desalination processes.

9. Use of aluminium ions as a concentration of at least 0.05 ppm in process water for improving the effect of peracid compounds in preventing microbial growth in process water, wherein the peracid is peracetic acid or performic acid, or a mixture thereof and wherein the amount of the added peracid in the process water is 0.2 ppm - 50 ppm.

## Patentansprüche

1. Verfahren zur Prävention des Mikrobenwachstums in Prozesswasser, umfassend die Zugabe von Aluminiumionen zu dem Prozesswasser vor oder mit der Zugabe einer Persäure oder einer Mischung aus Persäuren, um die Konzentration der Aluminiumionen in dem Prozesswasser bei einem Niveau von mindestens 0,05 ppm zu halten, wodurch die biozide Wirkung der Persäure oder einer Mischung aus Persäuren im Prozesswasser verstärkt wird,
wobei die Persäure eine Peroxyessigsäure oder Perameisensäure oder eine Mischung davon ist, und wobei die Menge der zugegebenen Persäure in dem Prozesswasser 0,2 ppm bis 50 ppm beträgt.

2. Verfahren nach Anspruch 1, wobei die Persäure Perameisensäure ist.

3. Verfahren nach Anspruch 1 oder 2, wobei die Aluminiumionen aus Aluminiumsalzen, wie Aluminiumchlorid, Polyaluminiumchlorid, Aluminiumsulfat, Aluminiumhydroxychlorid, Aluminiumhydroxid, stammen.

4. Verfahren nach einem der Ansprüche 1 bis 3, wobei die Menge der zugegebenen Persäure in das Prozesswasser 0,5 bis 20 ppm, vorzugsweise 0,7 bis 7 ppm, beträgt.

5. Verfahren nach einem der Ansprüche 1 bis 4, wobei die Aluminiumionen vor oder mit der Zugabe von Persäure auf ein Niveau von 0,05 ppm bis 100 ppm, vorzugsweise 0,5 bis 20 ppm, noch besser 0,5 bis 5 ppm im Prozesswasser reguliert sind.

6. Verfahren nach einem der Ansprüche 1 bis 5, wobei das Prozesswasser Süßwasser, Kühlwasser, Kreislaufwasser und Abwasser aus Industrieprozessen, Wasser aus Entsalzungsprozessen umfasst.

7. Verfahren nach einem der Ansprüche 1 bis 6, wobei das Prozesswasser Industrieprozesswasser aus der Pulpe- und Papierindustrie, Metallindustrie, Textilindustrie oder Lebensmittelindustrie umfasst.

8. Verfahren nach einem der Ansprüche 1 bis 7, wobei das Prozesswasser Wasser aus Entsalzungsprozessen umfasst.

9. Verwendung von Aluminiumionen als eine Konzentration von mindestens 0,05 ppm in Prozesswasser zur Verbesserung der Wirkung von Persäureverbindungen zur Prävention von Mikrobenwachstum in Prozesswasser, wobei die Persäure Peroxyessigsäure oder Perameisensäure oder eine Mischung davon ist, und wobei die Menge der zugegebenen Persäure im Prozesswasser 0,2 ppm bis 50 ppm beträgt.

## Revendications

1. Procédé destiné à la prévention d'une croissance bactérienne dans l'eau de traitement, qui comprend l'addition d'ions aluminium dans l'eau de traitement avant de ou avec l'addition d'un peracide ou d'un mélange de peracides pour maintenir la concentration d'ions aluminium dans l'eau de traitement à un niveau d'au moins 0,05 ppm augmentant ainsi la performance biocide dudit peracide ou d'un mélange de peracides dans l'eau de traitement, dans lequel le peracide est l'acide peracétique ou l'acide performique, ou un mélange de ceux-ci et dans lequel la quantité de peracide ajouté dans l'eau de traitement est comprise entre 0,2 ppm et 50 ppm.

2. Procédé selon la revendication 1, dans lequel le peracide est l'acide performique.

3. Procédé selon la revendication 1 ou la revendication 2, dans lequel les ions aluminium proviennent de sels d'aluminium, tels que le chlorure d'aluminium, le chlorure de polyaluminium, le sulfate d'aluminium, le chlorhydrate d'aluminium et l'hydroxyde d'aluminium.

4. Procédé selon l'une quelconque des revendications 1 à 3, dans lequel la quantité de peracide ajouté dans l'eau de traitement est comprise entre 0,5 et 20 ppm, plus préférablement entre 0,7 et 7 ppm.

5. Procédé selon l'une quelconque des revendications 1 à 4, dans lequel les ions aluminium sont ajustés à un niveau compris entre 0,05 ppm et 100 ppm, de préférence entre 0,5 et 20 ppm, plus préférablement entre 0,5 et 5 ppm dans l'eau de traitement avant ou avec l'addition du peracide.

6. Procédé selon l'une quelconque des revendications 1 à 5, dans lequel l'eau de traitement comprend de l'eau fraîche, de l'eau de refroidissement, des eaux et des effluents de recirculation provenant de processus industriels, des eaux provenant de processus de désalinisation.

7. Procédé selon l'une quelconque des revendications 1 à 6, dans lequel l'eau de traitement comprend de l'eau de processus industriels provenant de l'industrie papetière, de l'industrie des métaux, de l'industrie du textile ou de l'industrie alimentaire.

8. Procédé selon l'une quelconque des revendications 1 à 7, dans lequel l'eau de traitement comprend de l'eau provenant de processus de désalinisation.

9. Utilisation d'ions aluminium comme une concentration d'au moins 0,05 ppm dans de l'eau de traitement pour l'amélioration de l'effet des composés peracides dans la prévention d'une croissance bactérienne dans l'eau de traitement, dans laquelle le peracide est l'acide peracétique ou l'acide performique, ou un mélange de ceux-ci et dans laquelle la quantité de peracide ajouté dans l'eau de traitement est comprise entre 0,2 ppm et 50 ppm.
